# FASCICULE DE BREVET EUROPEEN

(11) **EP 3 137 871 B1**
(45) Date de publication et mention de la délivrance du brevet: **08.03.2023**
(21) Numéro de dépôt: 15720955.2
(22) Date de dépôt: 30.04.2015
(51) Int. Cl.: G01M 17/02, B60C 11/24

(54) **SYSTÈME D'ÉVALUATION DE L'ÉTAT D'UN PNEUMATIQUE**
SYSTEM ZUR BEWERTUNG DES ZUSTANDS EINES REIFENS
SYSTEM FOR EVALUATING THE CONDITION OF A TYRE

(30) Priorité: 02.05.2014 FR 1454016
(43) Date de publication de la demande: 08.03.2017
(73) Titulaire: Compagnie Générale des Etablissements Michelin, 63000 Clermont-Ferrand (FR)
(72) Inventeur: LEDOUX, Thomas, F-63040 Clermont-Ferrand Cedex 9 (FR); PERNOT, Alexandre, F-63040 Clermont-Ferrand Cedex 9 (FR); MARTIN, Denis, F-63040 Clermont-Ferrand Cedex 9 (FR); HEREDIA, Guillaume, F-63040 Clermont-Ferrand Cedex 9 (FR); FORISSIER, Timothée, F-38246 Meylan Cedex (FR); CLAEYSSEN, Frank, F-38246 Meylan Cedex (FR); PAGÈS, Alexandre, F-38246 Meylan Cedex (FR)
(74) Mandataire: Roussy, Delphine
(86) Numéro de dépôt international: PCT/EP2015/059563
(87) Numéro de publication internationale: WO 2015/166074

(56) Documents cités:
- EP-A2- 0 384 874
- WO-A1-2007/059935
- FR-A1- 2 625 808
- GB-A- 2 443 965

## Description

### DOMAINE DE L'INVENTION

La présente invention est relative à un système d'évaluation de l'état d'un pneumatique, et plus particulièrement l'état d'usure d'un pneumatique.

De manière connue, la bande de roulement d'un bandage pneumatique, qu'il soit destiné à équiper un véhicule de tourisme, poids lourd, Génie Civil ou autre..., est pourvue d'une sculpture comprenant notamment des éléments de sculpture ou blocs élémentaires délimités par diverses rainures principales, longitudinales, transversales ou encore obliques, les blocs élémentaires pouvant en outre comporter diverses incisions ou lamelles plus fines. Les rainures constituent des canaux destinés à évacuer l'eau lors d'un roulage sur sol mouillé et définissent les bords d'attaque des éléments de sculpture.

Quand un bandage pneumatique est neuf, la bande de roulement est à sa hauteur maximale. Cette hauteur initiale peut varier en fonction du type de bandage pneumatique considéré ainsi que de l'usage auquel il est destiné ; à titre d'exemple, les bandages pneumatiques « hiver » ont généralement une profondeur de sculpture supérieure à celle de bandages pneumatiques « été ». Lorsque le bandage pneumatique s'use, la hauteur des blocs élémentaires de la sculpture diminue et la raideur de ces blocs élémentaires augmente. L'augmentation de raideur des blocs élémentaires de sculpture entraîne une diminution de certaines performances du bandage pneumatique, telle l'adhérence sur sol mouillé. De plus, les capacités d'évacuation d'eau diminuent fortement lorsque la profondeur des canaux des sculptures diminue.

Il est donc souhaitable de pouvoir suivre l'évolution de l'usure de la bande de roulement d'un bandage pneumatique.

On connaît, du document US 2009/0000370, un système de mesure comprenant un banc de roulement destiné à accueillir le passage d'un véhicule. Le système comprend une source d'énergie qui émet un signal sans fil en direction du pneumatique, et un capteur qui détecte un signal émis en retour par le pneumatique. A partir de ce signal retour, une unité de contrôle détermine la profondeur de la sculpture du pneumatique. Toutefois, on a constaté que ce système nécessite une alimentation constante des différents éléments, et n'offre donc qu'une faible autonomie.

La présence invention a donc pour objet de remédier à cet inconvénient, en proposant un système autonome d'évaluation de l'état d'un pneumatique.

### BREVE DESCRIPTION DE L'INVENTION

L'invention porte sur un système d'évaluation de l'état d'un pneumatique selon a revendication 1. Ainsi, l'invention propose un système d'évaluation de l'état d'un pneumatique, le système comprenant un premier boîtier posé au sol et un dispositif de détection de l'usure d'un pneumatique lors d'un passage du pneumatique sur ledit premier boîtier, ledit système comprenant en outre
- un premier dispositif de détection de la présence d'un pneumatique sur le premier boîtier, et
- des moyens électroniques d'activation du dispositif de détection d'usure lors de la détection de la présence d'un pneumatique par le premier dispositif de détection de présence.

Le dispositif de détection de l'usure comprend, dans une réalisation avantageuse, un boitier avec une face d'application destinée à être en contact avec la surface du pneumatique et un capteur placé dans le boitier capable de mesurer la distance d qui sépare ledit capteur des armatures métalliques constituant le pneumatique. Le capteur comporte par exemple une source de champ magnétique statique ou alternatif et un élément sensible adjacent, la source étant une bobine ou un aimant permanent et l'élément sensible un capteur dont le signal de sortie peut, par exemple, être fonction du niveau du champ d'induction magnétique local. Dans ce cas, l'élément sensible est positionné de telle sorte que l'intensité du champ magnétique varie lorsque la distance d diminue.

Dans un mode de réalisation, l'élément sensible est choisi dans le groupe des capteurs à effet Hall ou magnéto résistif. Le dispositif de détection comprend avantageusement plusieurs capteurs du même type, installés dans le boîtier posé au sol.

Dans une réalisation préférentielle, le système est tel que la distance, projetée sur une surface parallèle au sol de roulage, entre le premier dispositif de détection de présence et le dispositif de détection d'usure est supérieure à la distance parcourue par un véhicule à une vitesse prédéterminée en un temps correspondant au temps nécessaire à l'activation du dispositif de détection d'usure.

Dans une autre réalisation préférentielle, le système est tel que la distance, projetée sur une surface parallèle au sol de roulage, entre la rampe d'accès et le dispositif de détection d'usure est supérieure à la distance parcourue par un véhicule à une vitesse prédéterminée en un temps correspondant au temps nécessaire à l'activation du dispositif de détection d'usure. Cette réalisation est particulièrement avantageuse dans le cas où le dispositif de détection d'usure est activé par la transmission d'une onde de choc jusqu'à l'électronique centrale. Dans ce cas, la propagation de l'onde de choc peut être considérée comme quasi instantanée, mais le temps de réveil de l'électronique va rester supérieur à ce temps de propagation. La distance entre la rampe d'accès et le système d'usure doit donc rester suffisante pour permettre le réveil de cette électronique avant que le pneu soit à la verticale des capteurs d'usure.

Le temps nécessaire à l'activation du dispositif de détection d'usure est, par exemple, de l'ordre d'une dizaine de millisecondes. La vitesse prédéterminée est, par exemple, une vitesse maximale conseillée pour l'utilisation du système d'évaluation, ou une vitesse au-delà de laquelle le bon fonctionnement du système n'est pas garanti pour un utilisateur.

Dans une autre réalisation avantageuse, le premier dispositif de détection de la présence d'un pneumatique comprend au moins un élément compris dans le groupe comprenant : un capteur de type ferroelectret (PP, CYTOP, etc), un capteur piézoélectrique organique, un câble et/ou fibre piézoélectrique, un transducteur piézoélectrique, un bilame piézoélectrique ou un capteur réalisé sous forme de composite piézoélectrique inorganique appliqué sur un support. Le composite piézoélectrique peut, par exemple, être une peinture additionnée de titanate de baryum, oxyde connu pour ses propriétés ferroélectriques. Tout autre élément possédant des propriétés ferroélectriques, comme par exemple et de façon non exhaustive, le TGS, le PZT, le BST, le KNbO3, le LiNbO3, le LiTaO3, pourrait être utilisé comme additif à une peinture classique pour former un composite piézoélectrique utilisable dans le cadre de la présente invention.

Dans une réalisation avantageuse, le dispositif de détection de présence est directement fixé sur le boîtier, par exemple dans une cavité aménagée dans le boîtier. Ainsi, le dispositif de détection peut être positionné parallèlement au sol accueillant le boîtier, ou dans une autre direction. Préférentiellement, le dispositif est protégé des agressions extérieures, par exemple la pluie. Ainsi, dans une autre réalisation, le dispositif peut être noyé dans le matériau formant le boîtier, ou dans une résine de protection additionnelle.

Par ailleurs, le dispositif est préférentiellement disposé de manière à ce que l'élément électro-actif par exemple de type piézoélectrique qu'il contient soit sollicité uniquement en compression lors d'un passage de véhicule sur le boîtier, et ce afin d'éviter toute dégradation du dispositif.

Dans une autre réalisation, le dispositif de détection de présence est fixé sur un substrat par exemple de type circuit imprimé, le substrat étant rendu solidaire du boîtier, par exemple par des vis, un adhésif, de la colle, ou tout autre moyen de fixation.

Selon l'invention, le système comprend un second dispositif de détection de la présence d'un pneumatique, similaire au premier dispositif de détection de présence. Dans une première application, ce second dispositif peut être utilisé pour détecter la fin du passage d'un véhicule sur le boîtier, et ainsi être utilisé comme moyen d'extinction du dispositif de détection d'usure.

Dans une seconde application, le système d'évaluation peut être utilisé quel que soit le sens d'approche d'un véhicule. Ainsi, le dispositif de détection de présence chronologiquement activé le premier , nommé premier dispositif de détection de présence, est utilisé pour activer le dispositif de détection d'usure. Avantageusement, le dispositif de détection de présence chronologiquement activé le second, nommé second dispositif de détection de présence, est utilisé pour éteindre le dispositif de détection d'usure.

Dans cette seconde application, le positionnement du second dispositif de détection de présence obéit aux mêmes règles de distance que décrites précédemment pour le premier dispositif de détection de présence. Ce positionnement sera ultérieurement détaillé à l'aide de figures.

Dans un autre mode de réalisation, le système comprend des moyens pour détecter que la valeur de sortie du dispositif de détection d'usure devient inférieure et/ou supérieur à un seuil prédéterminé, et pour commander en conséquence l'extinction du dispositif de détection.

Dans une réalisation avantageuse, le système comprend en outre des moyens de réglage de la sensibilité du dispositif de détection de la présence du pneumatique.

Le réglage de la sensibilité permet par exemple de choisir de ne détecter que les véhicules au-delà d'un certain poids. Ceci permet notamment de n'activer le système que lors du passage d'un poids lourd dont l'évaluation est souhaitée, et de ne pas activer le système lors du passage intempestif d'un véhicule léger.

Dans ce cas, les moyens de réglage de la sensibilité sont, par exemple, des moyens électroniques, tels qu'ultérieurement décrit à l'aide des figures.

Une autre possibilité, dans le cas où le capteur de présence de pneumatique est réalisé au moyen d'un capteur de type ferroelectret, d'un composite piézoélectrique, d'un buzzer ou d'un câble piézoélectrique positionné contre la structure du boitier, consiste en l'adaptation de l'épaisseur ou de la raideur de la structure dudit boitier, afin de réduire d'autant la déformation, ou l'onde de choc perçue par le capteur de présence de pneumatique.

On peut également, dans un autre mode de réalisation, adapter l'épaisseur ou la raideur d'une plaque de matériau quelconque sur lequel est appliqué la peinture, ou sur lequel sont collé des éléments piézoélectriques et qui est ensuite fixé par tout moyen approprié sur la structure

Une autre possibilité encore, dans le cas où le dispositif de détection de présence met en oeuvre une peinture piézoélectrique, est d'adapter l'épaisseur et/ou la surface de la couche de peinture déposée pour adapter la réponse du capteur de présence de pneumatique.

Dans un mode de réalisation avantageux, les moyens électroniques d'activation du dispositif de détection d'usure comprennent des moyens de modifier un mode de fonctionnement des différents microcontrôleurs du dispositif de détection d'usure.

Dans un autre mode de réalisation, les moyens électroniques d'activation du dispositif de détection d'usure comprennent des moyens pour agir sur l'alimentation du dispositif de détection d'usure. De manière plus précise, les moyens électroniques peuvent agir sur l'alimentation de la carte mère du dispositif de détection d'usure, mais également sur l'alimentation des fonctionnalités de lecture de RFID du dispositif de détection, ou enfin sur les fonctionnalités de transmission d'information par voie Hertzienne dudit dispositif.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 est une vue en perspective d'un véhicule dont un pneumatique passe au-dessus d'un boitier appartenant à un système selon l'invention
- les figures 2a, 2b, 2c ; 3a, 3b, 3c ; et 4a, 4b, 4c montrent respectivement plusieurs modes de réalisation du système selon l'invention, avec des variantes de dispositif de détection de présence de pneumatique, tous étant sensibles à la déformation du boitier,
- les figures 5a, 5b et 5c représentent les étapes d'un mode de réalisation d'un capteur de détection de présence de pneumatique mettant en oeuvre une peinture piézoélectrique.
- Les figures 6a, 6b et 7a et 7b montrent des exemples d'intégration de buzzer piézoélectrique dans le boitier du système selon l'invention.
- Les figures 8a, 8b et 8c montrent un mode de réalisation du système selon l'invention avec un dispositif de détection de présence de pneumatique sensible au choc provoqué par l'arrivée d'un pneumatique sur le système.
- la figure 9 montre des courbes représentatives de la sortie d'un capteur d'usure utilisé dans un dispositif d'usure au sens de la présente invention,
- la figure 10 montre un exemple de schéma électronique du dispositif de détection de présence de pneumatique permettant de piloter le réveil du système selon invention,
- la figure 11 montre une variante du schéma électronique de la figure 10 qui permet de piloter le démarrage complet du système selon l'invention,

### DESCRIPTION DU MEILLEUR MODE DE REALISATION DE L'INVENTION

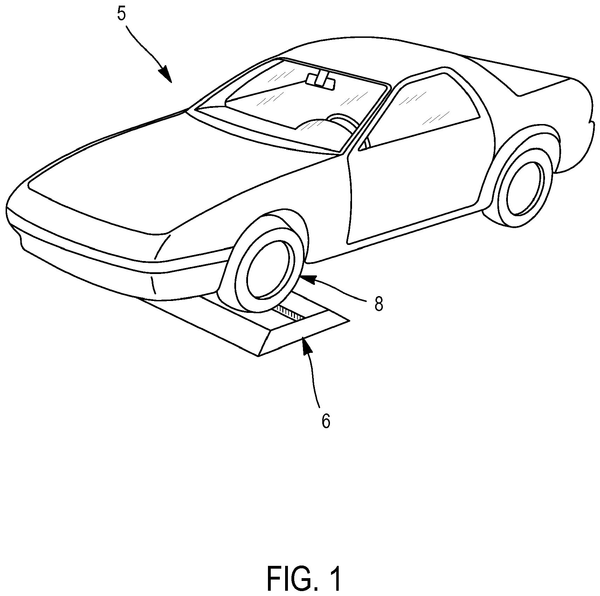

La figure 1 présente un véhicule 5 dont le pneumatique 8 roule sur un boitier 6 appartenant à un système d'évaluation selon l'invention. La figure montre un véhicule de tourisme mais un tel système est aussi utilisable pour tout autre véhicule, tel un poids-lourd ou un bus. La détection de l'état d'usure du pneumatique 8 est faite lorsque le pneumatique roule au-dessus du boitier 6 sans qu'il soit nécessaire d'arrêter le véhicule ou de démonter le pneumatique du véhicule.

Dans ce mode de réalisation, le boîtier se présente sous la forme d'un ralentisseur pour véhicules terrestres réalisé dans un matériau apte à résister au passage de multiples pneumatiques sans se dégrader. Le matériau est, par exemple, un composite à base de résine vinylester, de fibres de verre de renforcement, et d'additifs divers bien connu de l'homme du métier.

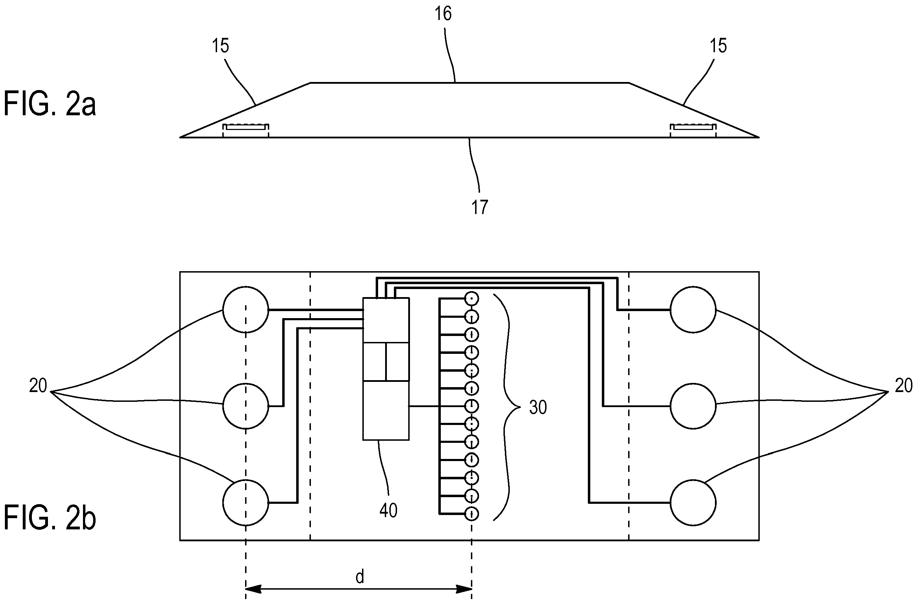

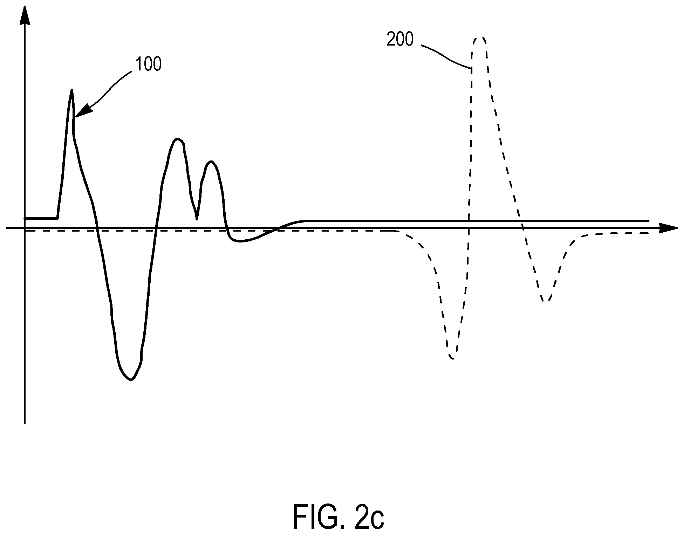

Les figures 2a, 2b et 2c montrent un exemple de réalisation du système selon l'invention constitué d'un boitier contenant le dispositif de mesure de l'usure et deux dispositifs de détection de présence de pneumatique, ainsi qu'un exemple de signaux captés par les dispositifs de détection de présence de pneumatique contenu dans ledit boitier.

Dans cet exemple le dispositif de détection de présence de pneumatique est sensible à la déformation du boitier lors du passage d'un pneumatique.

Le boitier est constitué de deux rampes d'accès 15 et d'une zone de mesure d'usure horizontale 16.

Toutefois, l'invention ne se restreint pas à cette forme de réalisation, et le boîtier peut prendre par exemple, toute autre forme d'objet portatif disposant d'une surface inférieure 17 permettant un positionnement sur un sol de roulage. Ainsi, dans une réalisation particulièrement favorable, le sol est préparé avec un béton adapté et un ragréage fin, permettant d'obtenir une bonne planéité.

Dans l'exemple des figures 2a et 2b, le boîtier comporte, dans chaque rampe 15, un dispositif de détection de présence d'un pneumatique. Dans l'exemple décrit, chacun de ces dispositifs comporte trois capteurs piézoélectriques 20, positionnés le long d'une ligne transversale au sens de roulage d'un véhicule arrivant sur le boîtier. Ainsi, la présence d'un véhicule est détectée par l'un ou l'autre des dispositifs de détection de présence avant qu'un pneumatique du véhicule ne soit situé sur la zone de mesure 16. Cela présente l'avantage de rendre le système insensible au sens de roulage du véhicule, puisque celui-ci peut arriver sur le système par l'une ou l'autre des rampes d'accès 15.

Les capteurs 20 sont reliés à une unité électronique 40 permettant d'effectuer l'évaluation d'usure par les capteurs d'usure 30. Ainsi que précédemment mentionné, la distance d entre le dispositif de détection de présence, ici sous forme de capteurs 20, et le dispositif de détection d'usure, ici sous forme de capteurs 30, doit être suffisante pour que l'unité électronique 40 puisse être activée par les capteurs 20 avant que la bande de roulement du pneumatique n'atteigne les capteurs 30.

Cette distance d est calculée en fonction de la vitesse maximale à laquelle les véhicules passeront sur le système et en tenant compte du temps nécessaire au réveil et/ou au démarrage des différentes fonctions électroniques du système.

Dans un exemple, la vitesse véhicule recommandée pour l'utilisation d'un système d'évaluation selon l'invention est de cinquante kilomètres par heure. Si le temps nécessaire pour l'activation de l'unité 40 est de l'ordre de dix millisecondes, cela signifie que la distance d doit être supérieure à treize centimètres pour garantir une détection d'usure correcte.

Préférentiellement, la distance d est inférieure à 1 mètre, pour garantir un encombrement et un coût du système les plus faibles possibles.

Avantageusement, le nombre et la disposition des capteurs 20 sont choisi de manière à garantir la détection de présence de tout pneu, quel que soit sa largeur. Ainsi, dans un cas d'utilisation du présent système pour l'évaluation de pneus poids lourds, il est utile que la distance entre deux capteurs soit inférieure à 315 millimètres. En fonction de la largeur totale du boitier, on déterminera donc un nombre de capteurs à utiliser.

L'unité électronique 40 comprend plusieurs éléments nécessaires au fonctionnement du dispositif de détection d'usure, notamment:
- un lecteur de RFID qui permet l'identification du pneumatique ou du véhicule, au moyen d'une antenne, lorsque cela peut se faire en mettant à profit la présence de RFID incorporé dans la structure du pneumatique, ou positionné sur le véhicule ;
- un module de communication sans fil qui permet l'envoi des informations à distance, via une antenne supplémentaire; et
- une alimentation distribuant le courant nécessaire à l'ensemble du système, à partir d'une batterie.

Chacune des rampes d'accès étant équipée d'un dispositif de détection de présence, le véhicule peut accéder au système de façon indifférenciée par l'une ou l'autre des rampes d'accès 15 afin de réaliser la mesure d'usure.

La figure 2c représente les deux signaux de sortie des capteurs de présence de pneumatique à base de buzzer piézoélectriques 20 collés à la structure du système selon l'invention

La courbe en trait continu représente l'amplitude de la tension émise par le système de détection de pneumatique lorsqu'un pneumatique passe sur la première rampe d'accès au système de mesure de l'usure.

La courbe en pointillés représente l'amplitude de la tension émise par le système de détection de pneumatique lorsque ledit pneumatique passe sur la seconde rampe d'accès au système de mesure de l'usure.

Les deux pics de tension 100 et 200 peuvent être utilisés pour provoquer le réveil de l'électronique de mesure puis pour provoquer la mise en veille de l'électronique de mesure, lorsque le pneumatique quitte le système de mesure de l'usure.

Ceci peut, par exemple, être réalisé au moyen d'une électronique réagissant à un seuil de tension.

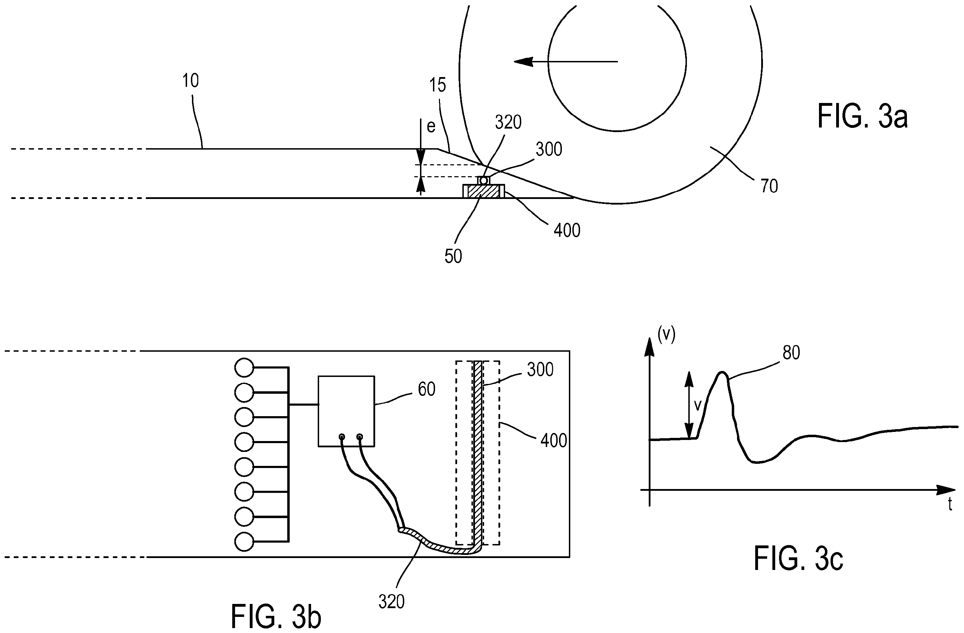

Les figures 3a, 3b et 3c représentent un mode de réalisation de l'invention mettant en oeuvre un dispositif de détection au moyen d'un câble piézoélectrique.

Dans cet exemple le dispositif de détection de présence de pneumatique est sensible à la déformation du boitier lors du passage d'un pneumatique sur ledit boitier.

Dans ce mode de réalisation, la détection de présence met en oeuvre un câble piézoélectrique 320 intégré dans la structure d'un système de mesure d'usure de pneumatique 10. Le capteur se présente sous la forme d'un câble coaxial 320 à l'intérieur duquel les deux conducteurs électriques sont séparés par un matériau piézoélectrique. Ce câble 320 est positionné dans une gorge 300 aménagée directement dans la structure du système de mesure d'usure de pneumatique, au fond d'une gorge 400 de largeur et profondeur plus importante. Les dimensions de la gorge 300 sont telles que sa profondeur n'excède pas le diamètre du câble piézoélectrique 320.

Le câble est maintenu en position dans la gorge 300 au moyen d'une pièce de plastique 50 fixée au fond de la gorge de plus grande dimension 400. Les deux électrodes du câble piezo électrique 320 sont directement connectées à l'électronique de pilotage 60 du système de mesure d'usure 10. Lorsqu'un pneumatique 70 arrive sur le système, la déformation créé par la bande de roulement sur la rampe d'accès 15 du système, fait apparaitre un pic de tension positive 80 entre les deux électrodes constitutives du câble piézoélectrique et visible sur la figure 3c. Ce pic de tension 80 est utilisable pour déclencher le réveil de l'électronique de pilotage 60 du système de mesure de l'usure 10.

L'épaisseur e de matériau séparant la surface de la rampe d'accès 15 du câble piézoélectrique 320 pilote l'intensité V du pic de tension maximal 80 émis par le câble 320, puisque celui-ci est sensible à la déformation de la structure créé par le pneumatique. En outre, la raideur du matériau constituant la structure du système peut également être adaptée pour piloter l'amplitude V du pic de tension maximal émis par le câble 320.

Ces exemples de mode de réglage de l'amplitude du pic de tension 80 peuvent permettre par exemple de choisir de ne détecter que les véhicules au-delà d'un certain poids. Ceci permet notamment de n'activer le système que lors du passage d'un poids lourd dont l'évaluation est souhaitée, et de ne pas activer le système lors du passage intempestif d'un véhicule léger.

Ce mode de réalisation, présente également l'avantage de permettre une détection continue sur toute la largeur de la rampe 15. Par ailleurs, l'utilisation d'un câble piézoélectrique permet de réaliser une connexion unique entre le dispositif de détection de présence et le dispositif de détection d'usure. Au contraire, dans le cas illustré sur la figure 2b, il est nécessaire de réaliser plusieurs connexions, entre chaque capteur 20 et l'unité électronique 40.

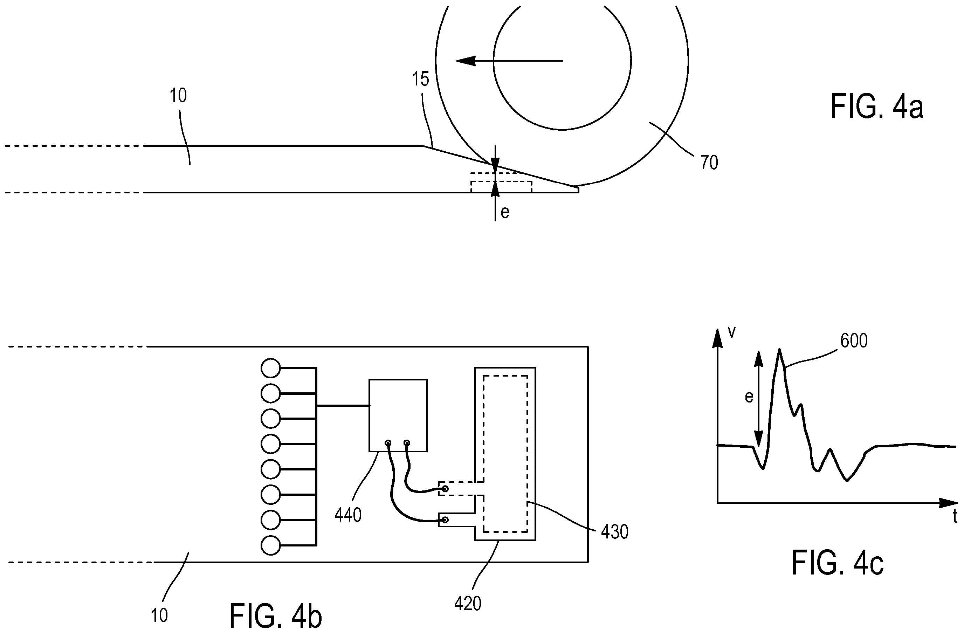

Les figures 4a, 4b et 4c représentent un mode de réalisation de l'invention mettant en oeuvre un dispositif de détection au moyen d'une peinture piézoélectrique, directement apposée sur une face intérieure du boitier.

Dans cet exemple le dispositif de détection de présence de pneumatique est sensible à la déformation du boitier lors du passage d'un pneumatique sur ledit boitier.

Dans ce mode de réalisation, le dispositif de détection se présente sous la forme d'une couche de peinture piézoélectrique, directement apposée entre 2 couches de peintures conductrice 420 et 430. Ces couches de peintures conductrices 420 et 430 forment chacune une électrode sur laquelle est directement connectée l'électronique de pilotage 440 du système de mesure d'usure 10.

Lorsqu'un pneumatique 70 arrive sur le système, la déformation créé par la bande de roulement sur la rampe d'accès 15 du système, fait apparaitre un pic de tension positive 600 visible sur la figure 4c et utilisable pour déclencher le réveil de l'électronique de pilotage 440 du système de mesure de l'usure 10.

L'épaisseur e de matériau sur lequel s'appuie le capteur de détection de pneumatique, pilote l'amplitude V du pic de tension maximal émis par le capteur, puisque celui-ci est sensible à la déformation créé par le pneumatique. En outre, la raideur du matériau constituant la structure du système peut également être adaptée pour piloter l'amplitude V du pic de tension maximal émis par le capteur.

Comme dans l'exemple des figures 3a, 3b et 3c, ces modes de réglage de l'amplitude du pic de tension 600 peuvent permettre par exemple de choisir de ne détecter que les véhicules au-delà d'un certain poids. Ceci permet notamment de n'activer le système que lors du passage d'un poids lourd dont l'évaluation est souhaitée, et de ne pas activer le système lors du passage intempestif d'un véhicule léger.

Comme dans le cas décrit dans les figures 3a, 3b et 3c ce mode de réalisation, présente l'avantage de permettre une détection continue sur toute la largeur de la rampe 15. Par ailleurs, l'utilisation d'une peinture piézoélectrique permet de réaliser une connexion unique entre le dispositif de détection de présence et le dispositif de détection d'usure. Au contraire, dans le cas illustré sur la figure 2b, il est nécessaire de réaliser plusieurs connexions, entre chaque capteur 20 et l'unité électronique 40.

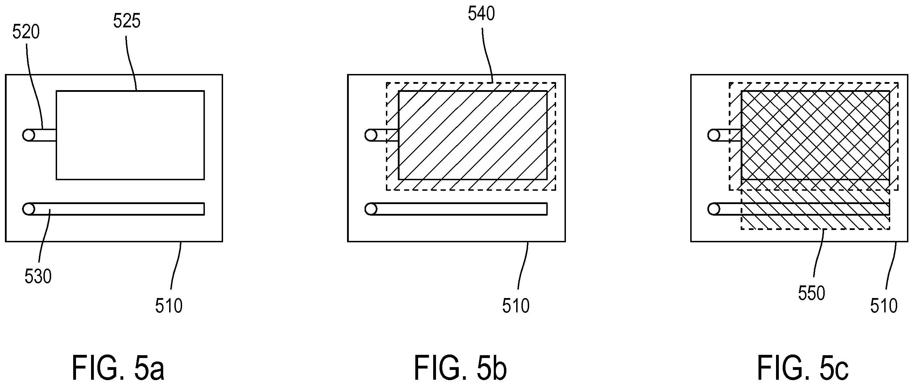

Les figures 5a, 5b et 5c représentent les étapes d'un mode de réalisation d'un capteur de détection de présence mettant en oeuvre une peinture piézoélectrique.

Le capteur réalisé dans cet exemple peut ensuite être fixé dans un système de mesure de l'usure par exemple par collage ou par vissage, de telle sorte que le choc, ou la déformation du boitier produit par l'arrivée d'un pneumatique sur le système, puisse être capté par le capteur.

La première étape, montrée en figure 5a, consiste à réaliser un circuit imprimé 510 muni de deux pistes conductrices 520 et 530. La piste 520 est reliée à une électrode rectangulaire 525, et la piste 530 est une piste droite.

La seconde étape de réalisation, montrée en figure 5b, consiste à déposer une couche de peinture piézoélectrique 540 au moyen d'un aérographe ou de tout autre moyen permettant le dépôt d'une couche de peinture préférentiellement uniforme en épaisseur.

La troisième étape de réalisation, montée en figure 5c, consiste, après séchage de la couche de peinture piézoélectrique 540, à appliquer une couche de peinture conductrice 550 sur la couche de peinture piézoélectrique 540, recouvrant préférentiellement la totalité de la surface de l'électrode 525 et s'étendant jusqu'à la piste 530. Ainsi, la peinture piézoélectrique se trouve positionnée entre deux électrodes et il est aisé de se connecter sur le capteur ainsi réalisé au moyen de simples points de soudures sur les deux pistes 520 et 530.

Une dernière étape, non montrée sur les figures 5a, 5b et 5c consiste à soumettre le capteur ainsi réalisé à un champ électrique approprié, afin de donner ses propriétés piézoélectrique au dit capteur.

Par rapport à l'exemple décrit dans les figures 4a, 4b et 4c, ce mode de réalisation présente l'avantage d'éviter l'utilisation de peinture conductrice pour réaliser les électrodes nécessaires à la connexion du capteur sur l'électronique du système. Cela apporte une plus grande fiabilité au système dans le temps.

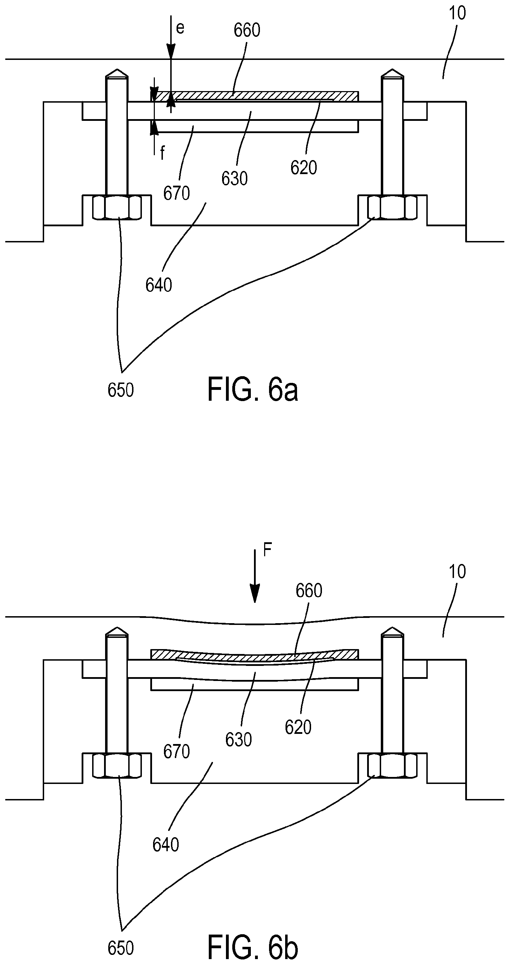

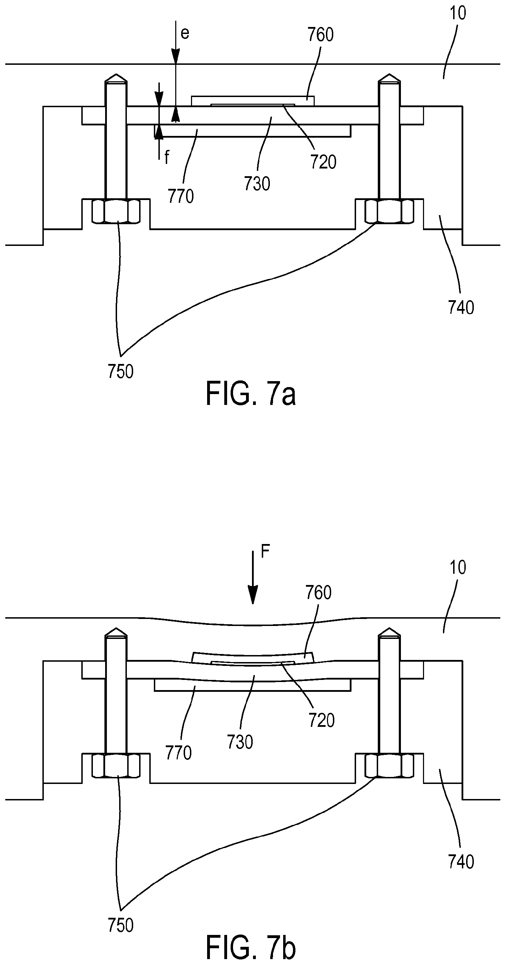

Des exemples d'installation de buzzer piézoélectrique dans un système de mesure de l'usure sont montrés en figures 6a et 6b et dans les figures 7a et 7b. Dans ces deux exemples, le système de détection de pneumatique est sensible à la déformation de la structure du dispositif de détection d'usure, lors du passage d'un pneumatique. En outre, dans ces deux exemples, les buzzers piézoélectriques travaillent en compression lors du passage d'un véhicule sur le dispositif. Cela a pour avantage d'éviter l'apparition, avec le temps, de fissures dans les céramiques du buzzer, ce qui rendrait le système inopérant.

Dans le mode d'intégration montré en figure 6a et 6b, un buzzer piézoélectrique 620 est positionné sur une plaque déformable 630, qui peut par exemple être un simple circuit imprimé sur lequel le buzzer serait soudé.

Cette plaque déformable est maintenue plaquée contre la structure du système de mesure de l'usure 10 au moyen d'une pièce de calage 640 vissée à la structure 10 au moyen de deux vis 650. La plaque déformable 630 est également traversée par les vis 650, de sorte qu'elle soit plus facilement maintenue en position. Enfin, cette plaque déformable 630 a une raideur préférentiellement inférieure à celle de la structure du système, contre lequel elle est positionnée, mais supérieure à celle du buzzer

Dans l'exemple des figures 6a et 6b, une pièce 660 d'un matériau transmettant intégralement les sollicitations auxquelles il est soumis, par exemple du caoutchouc, est positionnée contre le buzzer 620, dans une première cavité aménagée à cet effet dans la structure 10, et dont les dimensions sont idéalement identiques à celles de la pièce 660.

Enfin, une seconde cavité 670 est aménagée sous la plaque déformable 630, dans la pièce de calage 640, à la verticale de la première cavité. Dans cet exemple, les dimensions de cette seconde cavité 670 sont identiques aux dimensions de la première cavité.

Lorsqu'un pneumatique passe sur ce système, une force F est appliquée verticalement sur ce détecteur de pneumatique. Ce faisant, une déformation locale de la structure 610 apparaît. Comme la pièce 660 est souple et incompressible, réalisé dans un matériau qui transmet intégralement les sollicitations auxquelles il est soumis, et logée dans une cavité de dimensions idéalement identiques à celle de la pièce 660, cette déformation locale provoque à son tour la déformation de la plaque 630 et du buzzer 620.

L'ensemble de ces déformations peut apparaitre au passage du pneumatique, car la seconde cavité 670 demeure vide et est située à la verticale du système du buzzer 620 et de la plaque déformable 630.

L'amplitude du signal électrique obtenu à la sortie du buzzer 620 peut-être piloté par l'épaisseur locale « e » de la structure du système de mesure de l'usure 10 et par la raideur du matériau utilisé pour réaliser cette structure 10.

Toujours pour piloter l'amplitude de ce signal de sortie du buzzer 620, il est possible également de jouer sur l'épaisseur f de la plaque déformable 630, ainsi que sur la raideur de cette plaque en utilisant des matériaux plus ou moins raides.

Dans cet exemple, il faut noter que le buzzer 620 travaille en compression car il est situé sur la partie supérieure de la plaque déformable 630. Cela est particulièrement avantageux, car cela permet d'améliorer la durée de vie de ce buzzer, et donc du système de détection de pneumatique ainsi réalisé.

Enfin, il est possible de remplacer le buzzer 620, par exemple, par un composite réalisé à base d'une poudre ferroélectrique directement déposé sur la plaque 630, telle une peinture piézoélectrique. Cette plaque 630 associée à son dépôt, peut par exemple être réalisée selon les modalités exposées aux figures 5a, 5b et 5c

Dans l'exemple des figures 7a et 7b, une première cavité 760 est aménagée dans la structure 10 de telle sorte que les dimensions de cette cavité soient supérieures aux dimensions du buzzer piézoélectrique 720.

Une seconde cavité 770 est aménagée sous la plaque déformable 730, dans la pièce de calage 740, à la verticale de la première cavité 760, de sorte que les dimensions de cette seconde cavité 770 soient supérieures aux dimensions de la première cavité 760.

Dans cet exemple, c'est la différence de dimension entre les deux cavités qui permet la transmission de la déformation de la structure à la plaque déformable 730 sur laquelle le buzzer 720 est positionné. Cela a pour avantage, par rapport aux figures 6a et 6b, d'éviter tout frottement d'un matériau incompressible sur le buzzer 720, et ainsi de garantir une plus grande durée de vie. Cela permet également de réaliser une solution plus économique, puisque il n'est pas nécessaire d'utiliser de pièce incompressible.

Comme dans l'exemple des figures 6a et 6b, la raideur de la plaque déformable 730 est préférentiellement inférieure à la structure du système contre lequel elle est positionnée, mais supérieure à la raideur du buzzer.

Lorsqu'un pneumatique passe sur ce système, une force F est appliquée verticalement sur ce détecteur de pneumatique. Ce faisant, une déformation locale de la structure 10 apparaît.

Comme la cavité 760 a des dimensions inférieures à celles de la cavité 770, la structure 10 appuie sur la plaque déformable 730. Cela entraine la déformation de la plaque déformable 730. Comme le buzzer 720 est positionné sur la partie supérieure de la plaque déformable 730, il travaille en compression lorsque ces déformations apparaissent.

Cela est particulièrement avantageux, notamment pour améliorer la durée de vie du buzzer piézoélectrique, et donc du système de détection de pneumatiques.

L'amplitude du signal électrique obtenu à la sortie du buzzer 720 peut-être piloté par l'épaisseur locale « e » de la structure du système de mesure de l'usure 10 et par la raideur du matériau utilisé pour réaliser cette structure 10.

Toujours pour piloter l'amplitude de ce signal de sortie du buzzer 720, il est possible également de jouer sur l'épaisseur f de la plaque déformable 730, ainsi que sur la raideur de cette plaque en utilisant des matériaux plus ou moins raides.

Enfin, un autre mode de réalisation encore consiste à jouer sur la différence de dimensions entre la cavité 760 et la cavité 770. Par exemple, si ces deux cavités sont de forme circulaire, le ratio des diamètres pilotera l'amplitude du signal électrique obtenu à la sortie du buzzer. Dans ce cas, entre deux solutions dimensionnelles, la solution dont le ratio des diamètres est le plus éloigné de 1 donnera une amplitude de signal plus importante.

Comme dans le cas des figures 6a et 6b, il est possible de remplacer le buzzer 720, par exemple, par un composite réalisé à base d'une poudre ferroélectrique directement déposé sur la plaque 730, telle une peinture piézoélectrique. Cette plaque 730 associée à son dépôt, peut par exemple être réalisée selon les modalités exposées aux figures 5a, 5b et 5c.

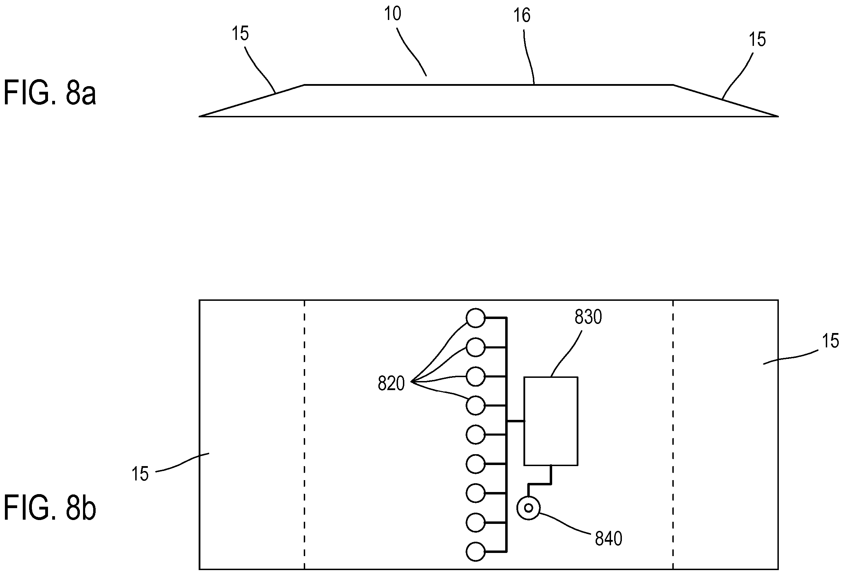

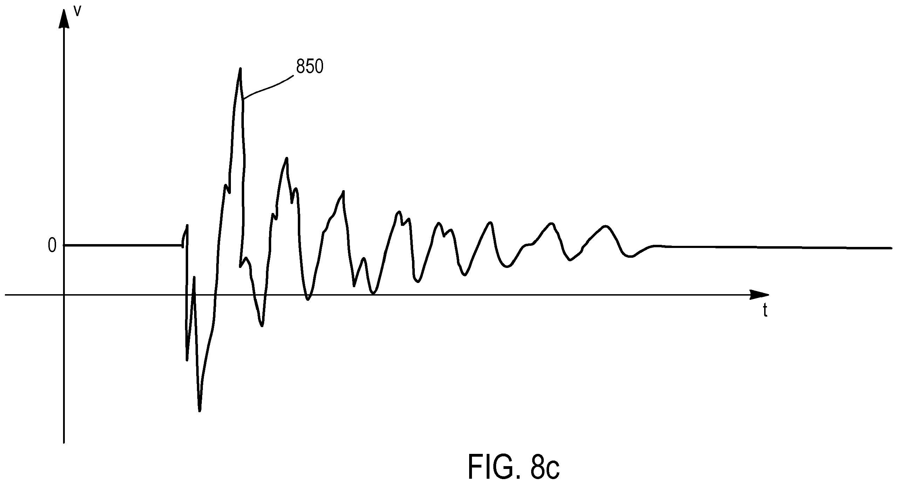

Les figures 8a, 8b et 8c représentent un exemple de schéma de principe d'un système de mesure de l'usure et d'un signal émis par le dispositif de détection de présence d'un pneumatique intégré à ce système de mesure de l'usure.

Dans cet exemple, le système de détection de pneumatique est sensible à l'onde de choc provoquée par l'arrivée d'un pneumatique sur le dispositif de détection de l'usure.

Dans cet exemple, le boitier du système de mesure de l'usure 10 se présente sous la forme d'un ralentisseur pour véhicules terrestres réalisé dans un matériau apte à résister au passage de multiples pneumatiques sans se dégrader. Ce boitier 10 est constitué de deux rampes d'accès 15 et d'une zone de mesure d'usure horizontale 16, et à l'intérieur de ce boitier sont logés plusieurs capteurs de mesure de l'usure 820.

Le boitier comprend en outre une carte électronique 830 qui permet la gestion du processus de mesure, l'identification du véhicule et des pneumatiques par lecture RFID et la transmission de l'ensemble des informations par radiofréquence jusqu'à une base de donnée distante.

Cette carte électronique est, par exemple, activée au moyen du capteur piézoélectrique 840, lors de l'arrivée d'un pneumatique sur le système. Dans l'exemple de la figure 8a, ce capteur piezoéletrique est un buzzer collé à la structure du système de mesure de l'usure 10.

Lors de l'arrivée d'un pneumatique sur le boitier, le choc du pneumatique sur l'une quelconque des rampes d'accès 15 se transmet sous forme de vibration dans la structure du système de mesure de l'usure, jusqu'au buzzer piézoélectrique 840.

La figure 8c est une représentation du signal 850 vu par le buzzer piézoélectrique 840 lors de l'arrivée du pneumatique sur l'une quelconque des rampes d'accès 15 du boitier 10. Ce signal peut alors être utilisé comme un signal de réveil de l'électronique centrale 830, par exemple lorsque ce signal 50 devient supérieur à un seuil prédéterminé.

Dans un autre exemple de réalisation, le buzzer est soudé directement sur la carte électronique centrale 30 et cette carte rendue solidaire de la structure par exemple par des vis ou en noyant l'ensemble de l'électronique dans une résine de protection, à l'intérieur de la structure. Dans ce cas, les vibrations se transmettent de la structure jusqu'au buzzer, en passant par le système de fixation de l'électronique sur la structure.

Ce mode de réalisation présente l'avantage de ne nécessiter qu'une connexion unique entre le dispositif de détection de présence et le dispositif de détection d'usure. Au contraire, dans le cas illustré sur la figure 2b, il est nécessaire de réaliser plusieurs connexions, entre chaque capteur 20 et l'unité électronique 40.

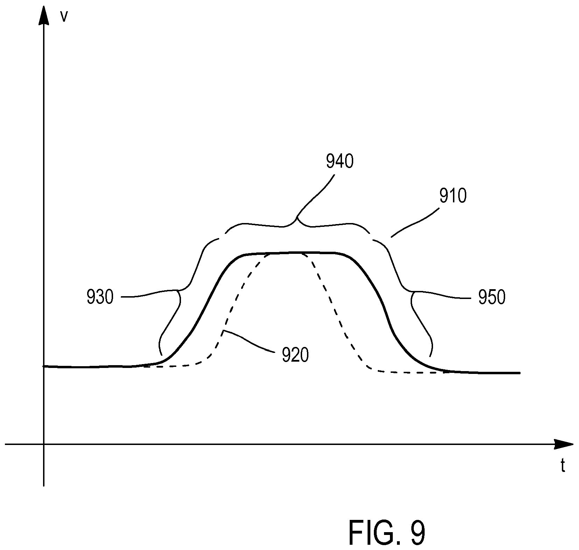

La figure 9 représente un exemple de la tension de sortie d'un capteur d'usure lors du passage d'un pneumatique. Les deux courbes 910 et 920 montrées sur cette figure sont obtenues lors de la mesure d'usure d'un pneumatique à deux vitesses différentes, la vitesse utilisée pour la courbe 910 étant inférieure à la vitesse utilisée pour la courbe 920.

On constate que, sur chacune des courbes de cet exemple, l'arrivée d'un pneumatique sur un capteur se traduit par un front montant 930. Ensuite, les deux courbes présentent une zone horizontale 940, qui fait suite au front montant 930. Cette zone 940 correspond au passage de l'aire de contact du pneumatique sur le capteur. C'est la valeur de la tension dans cette zone qui est relevée pour mesurer l'usure du pneumatique.

Enfin, un front descendant 950 illustre la fin du passage du pneumatique jusqu'à la disparition totale de celui-ci, vu du capteur. Ainsi, ce front descendant peut avantageusement être utilisé comme signal déclencheur de la mise en veille, ou de l'extinction du système de mesure, puisque la zone utile de la courbe a pu être exploitée juste avant.

Dans l'exemple de la figure 9, la tension de sortie augmente lorsqu'un pneumatique passe à la verticale des capteurs d'usure, mais l'électronique de mesure peut également être réalisée de sorte que cette tension diminue lors du passage d'un pneumatique. Dans ce cas c'est un front montant qui traduira la fin du passage d'un pneumatique et qui pourra être utilisé pour déclencher l'extinction du système de mesure.

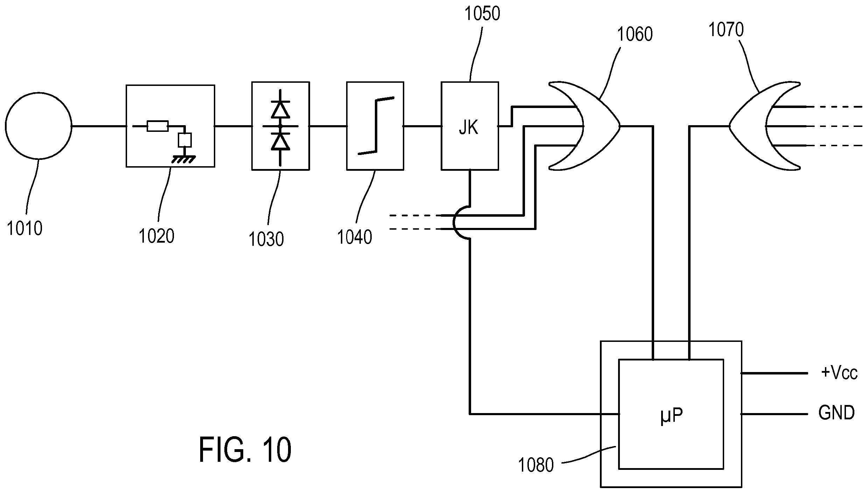

La figure 10 représente un schéma d'un système électronique apte à commander le réveil du système lors de la détection de présence d'un pneumatique. Cette électronique est compatible avec les solutions basées sur la détection de la déformation du boitier ou avec les solutions basées sur la détection de l'onde de choc provoquée par l'arrivée d'un pneumatique sur le boitier.

Dans l'exemple de la figure 10, le dispositif de détection de présence de pneumatique contient un capteur piézoélectrique 1010 assurant la détection du pneumatique. Un premier bloc fonctionnel 1020 adapte l'amplitude du signal à la plage d'alimentation des composants. Dans un exemple de réalisation, ce bloc fonctionnel 1020 comprend un pont diviseur, à base de résistance. Dans un autre exemple de réalisation, le bloc fonctionnel 1020 comprend une capacité installée en parallèle du capteur piézoélectrique 1010. Ce deuxième exemple de réalisation permet d'éviter une décharge du capteur 1010.

Le système comprend en outre un bloc fonctionnel 1030 destiné à protéger les circuits avals contre des surtensions. Ce bloc 1030 comprend, par exemple, une diode de clamp. Le système comprend également un bloc fonctionnel 1040 permettant de comparer un signal analogique issu du capteur piézoélectrique 1010 à un seuil de détection prédéterminé. Ce seuil peut-être choisi, par exemple, afin de limiter la sensibilité du dispositif de détection de présence au passage des seuls pneumatiques de véhicules Poids lourds. Dans des cas d'applications du système selon l'invention à des véhicules lourds, cela permet avantageusement d'éviter d'actionner ledit système pour des véhicules légers pour lesquels on ne souhaite pas réaliser des mesures.

La sortie de ce bloc 1050 est utilisée pour piloter le bloc fonctionnel 1060.

Ce bloc fonctionnel 1050 comprend une bascule asynchrone permettant de mémoriser l'état haut du signal jusqu'à acquittement par un signal de réinitialisation provenant d'un microprocesseur 1080. Ce bloc comprend préférentiellement une bascule JK avec un signal de réinitialisation asynchrone tel que le composant 74LVC109.

Les blocs fonctionnels 1020, 1030, 1040 et 1050 sont dupliqués pour chaque capteur piézoélectrique du système, mais ils ne sont ici représentés qu'une seule fois, par souci de clarté des figures.

Le système comprend enfin une porte logique OU 1060, qui reçoit en entrée l'ensemble des signaux issus des différents capteurs piézoélectrique, et qui permet en sortie d'émettre un signal pour avertir le microprocesseur 1080 du déclenchement de l'un des capteurs piézoélectriques répartis le long d'un des accès au système de mesure d'usure.

Avantageusement, le système comprend également une porte logique OU 1070. Cette porte logique permet de réaliser la même fonction que la porte 1060, pour des capteurs piézoélectriques installés sur une autre zone d'accès au boitier.

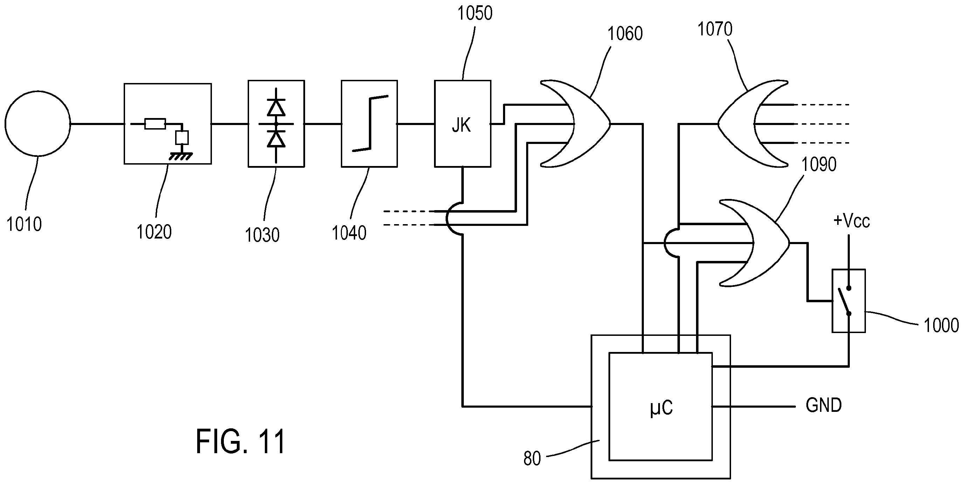

La figure 11 représente un autre schéma d'un système électronique apte à commander le réveil du système lors de la détection de présence d'un pneumatique. Cette électronique est également compatible avec les solutions basées sur la détection de la déformation du boitier ou avec les solutions basées sur la détection de l'onde de choc provoquée par l'arrivée d'un pneumatique sur le boitier.

Ce schéma est similaire à celui de la figure 10 pour ce qui concerne les capteurs 1010 et les blocs fonctionnels 1020, 1030, 1040, 1050, 1060 et 1070.

La différence par rapport à la figure 10 réside dans la présence d'une porte logique OU 1090, permettant de commander un interrupteur 1000 contrôlant l'alimentation du microcontrôleur. Ce microcontrôleur peut, par l'intermédiaire d'un signal logique, forcer le maintien de l'alimentation même après réinitialisation des blocs 1050.

L'avantage procuré par cette solution par rapport à l'exemple de la figure 10 est de permettre le démarrage et de l'arrêt complet du système. Cela permet de diminuer au maximum la consommation électrique de l'ensemble.

## Revendications

1. Système d'évaluation de l'état d'un pneumatique (10), le système (10) comprenant un premier boîtier (6) posé au sol et un dispositif de détection de l'usure (30, 820) d'un pneumatique lors d'un passage du pneumatique (8, 70) sur ledit premier boîtier (6), ledit système (10) comprenant en outre
- un premier dispositif de détection de la présence d'un pneumatique (20, 220, 320, 620, 720, 840) sur le premier boîtier (6), et
- des moyens électroniques (40, 60, 440, 830) d'activation du dispositif de détection d'usure (30,820) lors de la détection de la présence d'un pneumatique (8, 70) par le premier dispositif de détection de présence (20, 220, 320, 620, 720, 840),
**Caractérisé en ce que** ledit système (10) comprend un second dispositif de détection de présence d'un pneumatique (20) sur le premier boîtier (6), similaire au premier dispositif de détection de présence (20, 220, 320, 620, 720, 840), étant apte à détecter la fin de passage d'un véhicule sur le premier boîtier (6) pour être utilisé comme moyen d'extinction du dispositif de détection d'usure (30, 820).

2. Système d'évaluation (10) selon la revendication 1, **caractérisé en ce que** la distance, projetée sur une surface parallèle au sol, entre le premier dispositif de détection de présence ou la rampe d'accès et le dispositif de détection d'usure (30, 820) est supérieure à la distance parcourue par un véhicule à une vitesse prédéterminée en un temps correspondant au temps nécessaire à l'activation du dispositif de détection d'usure.

3. Système d'évaluation (10) selon la revendication 1 ou 2, **caractérisé en ce que** les moyens électroniques ( 40, 60, 440, 830) d'activation sont sensibles à une déformation mécanique directe et/ou à une onde d'un choc se propageant dans le boîtier (6).

4. Système d'évaluation (10) selon l'une des revendications précédentes dans lequel le premier dispositif de détection de la présence d'un pneumatique (10, 220, 320, 620, 720, 840) comprend au moins un élément compris dans le groupe comprenant : un capteur de type ferroelectret (PP, CYTOP, etc), un capteur piézoélectrique organique, un câble et/ou fibre piézoélectrique, un transducteur piézoélectrique, un bilame piézoélectrique ou un capteur réalisé sous forme de composite piézoélectrique inorganique appliqué sur un support.

5. Système d'évaluation (10) selon la revendication 4, dans lequel le dispositif de détection de présence (20, 220, 320, 620, 720, 840) est directement fixé sur le premier boîtier (6).

6. Système d'évaluation (10) selon la revendication 4, dans lequel le dispositif de détection de présence (20, 220, 320, 620, 720, 840) est fixé sur un circuit imprimé (510) ou une plaque (620, 720) de matériau quelconque dont la raideur est préférentiellement inférieure à celle du matériau constituant le premier boitier (6), le circuit (510) ou la plaque (620, 720) étant rendu solidaire du premier boîtier (6).

7. Système d'évaluation (10) selon la revendication 4, dans lequel le dispositif de détection de présence (20, 220, 320, 620, 720, 840) est noyé dans le matériau constituant le premier boîtier (6).

8. Système d'évaluation (10) selon l'une des revendications précédentes, comprenant des moyens pour détecter que la valeur de sortie du dispositif de détection d'usure devient inférieure et/ou supérieure à un seuil prédéterminé et pour commander en conséquence une extinction du dispositif de détection d'usure.

9. Système d'évaluation (10) selon l'une des revendications précédentes, dans lequel les moyens électroniques ( 40, 60, 440, 830) d'activation du dispositif de détection d'usure comprennent des moyens pour modifier un mode de fonctionnement d'un micro-contrôleur du dispositif de détection d'usure (30, 820).

10. Système d'évaluation (10) selon l'une des revendications précédentes, dans lequel les moyens électroniques (40, 60, 440, 830) d'activation du dispositif de détection d'usure comprennent des moyens pour agir sur l'alimentation du dispositif de détection d'usure (30, 820).

## Patentansprüche

1. System zur Bewertung des Zustands eines Reifens (10), wobei das System (10) ein erstes Gehäuse (6), das auf den Boden gestellt ist, und eine Vorrichtung zur Erkennung des Verschleißes (30, 820) eines Reifens bei einem Rollen des Reifens (8, 70) über das erste Gehäuse (6) umfasst, wobei das System (10) ferner Folgendes umfasst
- eine erste Vorrichtung zur Erkennung des Vorhandenseins eines Reifens (20, 220, 320, 620, 720, 840) auf dem ersten Gehäuse (6), und
- elektronische Mittel (40, 60, 440, 830) zur Aktivierung der Verschleißerkennungsvorrichtung (30, 820) bei der Erkennung des Vorhandenseins eines Reifens (8, 70) durch die erste Vorrichtung zur Erkennung des Vorhandenseins (20, 220, 320, 620, 720, 840),
**Dadurch gekennzeichnet, dass** das System (10) eine zweite Vorrichtung zur Erkennung des Vorhandenseins eines Reifens (20) auf dem ersten Gehäuse (6) umfasst, die der ersten Vorrichtung zur Erkennung des Vorhandenseins (20, 220, 320, 620, 720, 840) ähnlich ist, die geeignet ist, das Ende des Rollens eines Fahrzeugs über das erste Gehäuse (6) zu erkennen, um als Mittel zum Ausschalten der Verschleißerkennungsvorrichtung (30, 820) benutzt zu werden.

2. Bewertungssystem (10) nach Anspruch 1, **dadurch gekennzeichnet, dass** der auf eine zum Boden parallele Fläche projizierte Abstand zwischen der ersten Vorrichtung zur Erkennung des Vorhandenseins oder der Zufahrtsrampe und der Verschleißerkennungsvorrichtung (30, 820) größer als die Strecke ist, die von einem Fahrzeug mit einer vorbestimmten Geschwindigkeit in einer Zeit zurückgelegt wird, die der Zeit entspricht, die zur Aktivierung der Verschleißerkennungsvorrichtung erforderlich ist.

3. Bewertungssystem (10) nach Anspruch 1 oder 2, **dadurch gekennzeichnet, dass** die elektronischen Aktivierungsmittel (40, 60, 440, 830) für eine direkte mechanische Verformung und/oder eine Welle eines Schocks, die sich im Gehäuse (6) ausbreitet, empfindlich sind.

4. Bewertungssystem (10) nach einem der vorhergehenden Ansprüche, wobei die erste Vorrichtung zur Erkennung des Vorhandenseins eines Reifens (10, 220, 320, 620, 720, 840) wenigstens ein Element aus der Gruppe umfasst, die Folgendes umfasst: einen Sensor vom Typ Ferroelektret (PP, CYTOP, usw.), einen organischen piezoelektrischen Sensor, ein piezoelektrisches Kabel und/oder eine piezoelektrische Faser, einen piezoelektrischen Wandler, ein piezoelektrisches Bimetall oder einen Sensor, der in Form eines anorganischen piezoelektrischen Verbundstoffs ausgebildet ist, der auf einen Träger aufgebracht ist.

5. Bewertungssystem (10) nach Anspruch 4, wobei die Vorrichtung zur Erkennung des Vorhandenseins (20, 220, 320, 620, 720, 840) direkt am ersten Gehäuse (6) befestigt ist.

6. Bewertungssystem (10) nach Anspruch 4, wobei die Vorrichtung zur Erkennung des Vorhandenseins (20, 220, 320, 620, 720, 840) auf einer gedruckten Schaltung (510) oder einer Platte (620, 720) aus einem beliebigen Material, dessen Steifigkeit vorzugsweise niedriger als die des Materials ist, das das erste Gehäuse (6) bildet, befestigt ist, wobei die Schaltung (510) oder Platte (620, 720) mit dem ersten Gehäuse (6) fest verbunden ist.

7. Bewertungssystem (10) nach Anspruch 4, wobei die Vorrichtung zur Erkennung des Vorhandenseins (20, 220, 320, 620, 720, 840) in das Material eingebettet ist, das das erste Gehäuse (6) bildet.

8. Bewertungssystem (10) nach einem der vorhergehenden Ansprüche, umfassend Mittel zum Erkennen, dass der Ausgangswert der Verschleißerkennungsvorrichtung eine vorbestimmte Schwelle unterschreitet und/oder überschreitet, und zur dementsprechenden Betätigung einer Ausschaltung der Verschleißerkennungsvorrichtung.

9. Bewertungssystem (10) nach einem der vorhergehenden Ansprüche, wobei die elektronischen Mittel (40, 60, 440, 830) zur Aktivierung der Verschleißerkennungsvorrichtung Mittel zur Änderung eines Betriebsmodus eines Mikrocontrollers der Verschleißerkennungsvorrichtung (30, 820) umfassen.

10. Bewertungssystem (10) nach einem der vorhergehenden Ansprüche, wobei die elektronischen Mittel (40, 60, 440, 830) zur Aktivierung der Verschleißerkennungsvorrichtung Mittel zur Wirkung auf die Stromversorgung der Verschleißerkennungsvorrichtung (30, 820) umfassen.

## Claims

1. System for evaluating the condition of a tyre (10), the system (10) comprising a first housing (6) placed on the ground and a device for detecting the wear of a tyre (30, 820) when the tyre (7, 80) passes over said first housing (6), said system (10) further comprising
- a first device for detecting the presence of a tyre (20, 220, 320, 720, 840) on the first housing (6), and
- electronic means (40, 60, 440, 830) for activating the wear detecting device (30, 820) during the detection of the presence of a tyre (7, 80) by the presence detecting device (20, 220, 320, 620, 720, 840),
**characterized in that** the system (10) comprises a second device for detecting the presence of a tyre. (20) on the first housing (6), similar to the first presence detecting device (20, 220, 320, 620, 720, 840), being able to detect the end of a vehicle passing over the first housing (6) to be used as a means of switching off the wear detecting device (30, 820).

2. Evaluating system (10) according to Claim 1, **characterized in that** the distance, projected over a surface parallel to the ground, between the first presence detecting device or the access ramp and the wear detecting device (30, 820) is greater than the distance travelled by a vehicle at a predetermined speed in a time corresponding to the time necessary for activating the wear detecting device.

3. Evaluating system (10) according to Claim 1 or Claim 2, **characterized in that** the activating electronic means (40, 60, 440, 830) are sensitive to a direct mechanical deformation and/or to a wave of a shock spreading in the housing (6).

4. Evaluating system (10) according to one of the preceding claims wherein the first device for detecting the presence of a tyre (20, 220, 320, 620, 720, 840) comprises at least one element from the group comprising: a ferroelectret (PP, CYTOP, etc.) sensor, an organic piezoelectric sensor, a piezoelectric cable and/or fibre, a piezoelectric transducer, a piezoelectric bimetallic strip or a sensor produced in the form of an inorganic piezoelectric composite applied to a supporting means.

5. Evaluating system (10) according to Claim 4, wherein the presence detecting device (20, 220, 320, 620, 720, 840) is fixed directly on the first housing (6).

6. Evaluating system (10) according to Claim 4, wherein the presence detecting device (20, 220, 320, 620, 720, 840) is fixed on a printed circuit (510) or a plate (620, 720) of any material, the stiffness of which is preferably less than that of the material forming the first housing (6), the circuit (510) or the plate (620, 720) being rigidly connected to the first housing (6).

7. Evaluating system (10) according to Claim 4, wherein the presence detecting device (20, 220, 320, 620, 720, 840) is embedded in the material forming the first housing (6).

8. Evaluating system (10) according to one of the preceding claims, comprising means for detecting that the output value of the wear detecting device becomes lower and/or higher than a predetermined threshold, and for accordingly commanding the wear detecting device to switch off.

9. Evaluating system (10) according to one of the preceding claims, wherein the electronic means (40, 60, 440, 830) for activating the wear detecting device comprise means for modifying an operating mode of a microcontroller of the wear detecting device (30, 820).

10. Evaluating system (10) according to one of the preceding claims, wherein the electronic means (40, 60, 440, 830 ) for activating the wear detecting device comprise means for acting upon the power supply of the wear detecting device (30, 820).
